(19) Europäisches Patentamt
European Patent Office
Office européen des brevets

(11) EP 1 381 645 B1

(12) **EUROPEAN PATENT SPECIFICATION**

(45) Date of publication and mention of the grant of the patent:
**28.05.2008 Bulletin 2008/22**

(21) Application number: **01995350.4**

(22) Date of filing: **30.11.2001**

(51) Int Cl.:
***C08K 5/00*** *(2006.01)* ***C08L 69/00*** *(2006.01)*

(86) International application number:
**PCT/US2001/046436**

(87) International publication number:
**WO 2002/046288 (13.06.2002 Gazette 2002/24)**

(54) **FLAME RETARDANT RESIN COMPOSITION AND MOLDED PRODUCTS THEREOF**

FLAMMWIDRIGE HARZZUSAMMENSETZUNG UND DARAUS HERGESTELLTE FORMKÖRPER

COMPOSITIONS DE RESINE IGNIFUGES ET PRODUITS MOULES PRODUITS AVEC CES COMPOSITIONS

(84) Designated Contracting States:
**DE ES FR GB NL**

(30) Priority: **04.12.2000 JP 2000369113**

(43) Date of publication of application:
**21.01.2004 Bulletin 2004/04**

(73) Proprietor: **GENERAL ELECTRIC COMPANY**
**Schenectady, NY 12345 (US)**

(72) Inventor: **SHIPING, Ma**
**Moka-shi,**
**Tochigi-ken 321-4341 (JP)**

(74) Representative: **Modiano, Micaela Nadia et al**
**Modiano Josif Pisanty & Staub Ltd**
**Thierschstrasse 11**
**80538 München (DE)**

(56) References cited:
**EP-A- 0 683 209**
**EP-A- 0 893 475**
**EP-A- 0 899 301**
**US-A- 5 294 655**
**US-A- 5 658 974**

- **PATENT ABSTRACTS OF JAPAN vol. 2000, no. 09, 13 October 2000 (2000-10-13) & JP 2000 159996 A (ASAHI CHEM IND CO LTD), 13 June 2000 (2000-06-13)**
- **DATABASE WPI Section Ch, Week 200121 Derwent Publications Ltd., London, GB; Class A14, AN 2001-205097 XP002243655 & JP 2000 327897 A (NEC CORP), 28 November 2000 (2000-11-28)**
- **PATENT ABSTRACTS OF JAPAN vol. 2000, no. 09, 13 October 2000 (2000-10-13) & JP 2000 178422 A (TORAY IND INC), 27 June 2000 (2000-06-27)**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 381 645 B1

## Description

FIELD OF THE INVENTION

The present invention relates to a nonflammable resin composition containing a polycarbonate-based resin, and more particularly relates to a nonflammable resin composition that is useful in applications that demand high heat resistance as well as impact resistance and hydrolysis resistance.

BACKGROUND OF THE INVENTION

Polycarbonate resins, both individually and as alloys with other thermoplastic resins, are engineering plastics with excellent impact resistance, heat resistance, and electrical characteristics, and are therefore used in a wide range of fields, including electrical engineering, electronics, and office automation. These fields of electrical engineering, electronics, and office automation require a high level of impact resistance and nonflammability (UL 94V) in products such as personal computer trim parts.

A method used in the past to improve the nonflammability of these resin compositions was to compound a polycarbonate with a large quantity of a polymer or an oligomer of a carbonate derivative of brominated bisphenol A. However, while the nonflammability of a polycarbonate resin is indeed improved by the addition of a large amount of a polymer or an oligomer of a carbonate derivative of brominated bisphenol A as a flame retardant, a problem is that impact resistance decreases, which makes the molded article more prone to cracking. Also, because a large quantity of halogen compounds including bromine are added, there is the danger that gas containing these halogens will be generated during burning, so from an environmental standpoint as well, it is preferable to use a flame retardant that does not contain halogens such as chlorine and bromine.

Phosphoric esters and silicone resins are known as flame retardants that contain no halogens. For example, Japanese Patent Publication S62-25706 proposes the addition of a phosphoric ester in order to improve the nonflammability of a polycarbonate-based resin. Nevertheless, raising the nonflammability of these resin compositions requires the addition of a large amount of phosphoric ester, and the problem with this is that it diminishes the heat resistance and impact resistance of a resin molded article.

In contrast, silicone resins have high heat resistance and generate no harmful gases when burned, and furthermore silicone resins themselves are highly safe, and as such have been used as flame retardants for polycarbonate-based resins.

A silicone compound that serves as a flame retardant is a polymer including one or more of the following four siloxane units (M units, D units, T units, and Q units).

M units

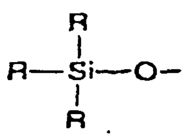

[$R_3SiO_{0.5}$]

D units

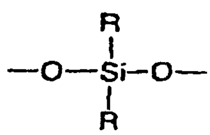

[$R_2SiO_{1.0}$]

T units

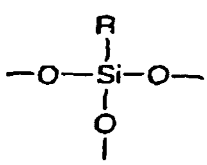

[$RSiO_{1.5}$]

Q units

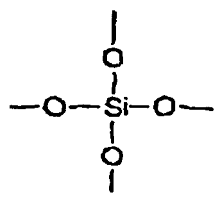

[$SiO_{2.0}$]

For example, Japanese Patent Publication S62-60421 discloses a nonflammable resin composition in which a silicone resin containing at least 80 wt% T units is added to a thermoplastic resin. Japanese Laid-Open Patent Application H5-86295 discloses a nonflammable resin composition in which a silicon resin containing 30 to 99 mol% T units, 0 to 80 mol % D units, 1 to 70 mol % M units, and 0 to 50 mol % Q units is added to a synthetic resin such as a polycarbonate.

Still, very few of the silicone resins discussed in these publications have a significant flame retardant effect when they are added by themselves, and a large amount of silicone resin must be added in order to satisfy the stringent nonflammability requirements of electrical and electronic device applications. As a result, this can have an adverse effect on the moldability, kneadability, and other required characteristics of the plastic, and is also disadvantageous in terms of cost, and is therefore impractical.

There have also been proposed methods in which a silicone compound is used together with a metal salt in an effort to reduce the amount of silicone compound that is added. For instance, Japanese Laid-Open Patent Application S56-100E53 discloses a nonflammable resin composition in which a silicone made up of D units and a Group IIa metal

salt of a $C_{14}$ to $C_{20}$ carboxylic acid are added to a polymer such as a polycarbonate. Japanese Patent Publication H3-48947 discloses a nonflammable composition in which a silicone resin made up of M and Q units is compounded along with another silicone resin and a Group IIa metal salt of carboxylic acid. However, the effect in terms of nonflammability is still inferior even when a silicone compound is used together with a metal salt, so to achieve an adequate flame retardant effect, either the amount in which the silicone resin is added has to be increased, or aluminum hydroxide or another such inorganic nonflammable filler or a halogen has to be used together with a phosphorus compound.

Thus, when a silicone resin is added as a flame retardant, an adequate nonflammability effect will not be obtained unless the added amount is large, but if this amount is increased, there is a marked decrease in the moldability of the resin composition, the appearance and mechanical strength of the molded article, and so on, and since silicone resins are themselves quite costly, a problem with compounding them in a polycarbonate-based resin is that the material cost goes up. Accordingly, there has been a need for the development of a silicone resin additive with a better nonflammability effect, or an additive that enhances the effect when used together with a silicone resin.

Japanese Laid-Open Patent Application H10-139964 proposes a nonflammable resin composition in which a silicone resin containing D and T units, expressed by the following formula and having a molecular weight (weight average molecular weight) of 10,000 to 270,000, is compounded with an aromatic polycarbonate.

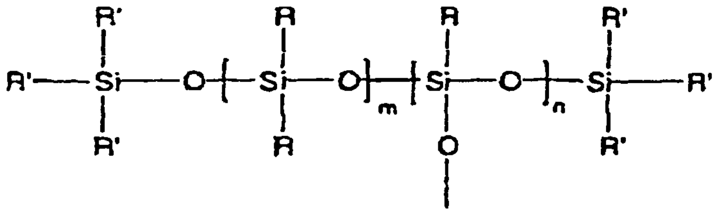

Japanese Laid-Open Patent Application H11-140294 proposes a nonflammable polycarbonate resin composition in which a silicone resin that contains 50 to 90 mol% T units, contains 10 to 50 mol% D units, and contains at least 80 mol% (out of the total organic substituents) phenyl groups is compounded with an aromatic polycarbonate resin.

However, with the nonflammable polycarbonate resin compositions discussed in Japanese Laid-Open Patent Applications H10-139964 and H11-140294, the burn time is still long and dripping is unsatisfactory, and nonflammability still comes up short in a combustibility test according to UL 94, which is widely used for evaluation in actual practice.

Japanese Laid-Open Patent Application H11-217494 discloses a nonflammable polycarbonate resin composition in which a polycarbonate resin is compounded with a silicone compound whose main structural unit is the structure expressed by the following formula, that is, a D unit, being made up of D units and T units and/ or Q units and having an aromatic group as an organic functional group, and with a metal salt of an aromatic sulfur compound and a fluorine-containing polymer.

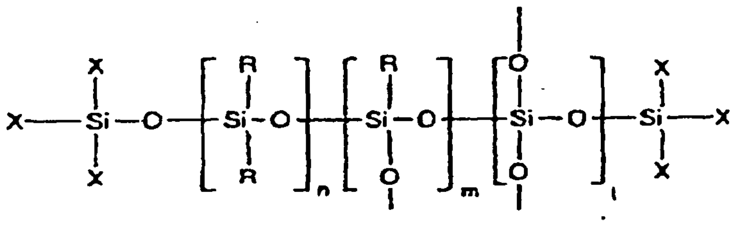

In the formula, R and X are organic functional groups.

However, a drawback to the nonflammable resin composition discussed in this Japanese Laid-Open Patent Application H11-217494 is that it makes use of a silicone resin with a high molecular weight, which hampers dispersion into the polycarbonate-based resin and tends to result in inadequate nonflammability.

Japanese Laid-Open Patent Application H11-222559 discloses a nonflammable resin composition that contains 100 weight parts of a synthetic resin including an aromatic ring in its molecule, such as an aromatic polycarbonate resin, and 0.1 to 10 weight parts of an organopolysiloxane containing alkoxy groups and phenyl groups, expressed by the compositional formula $R^1{}_mR^3{}_nSi(OR^3)_p(OH)_qO_{(4-m-n-p-q)/2}$ (where $R^1$ is a phenyl group, $R^2$ is a $C_1$ to $C_6$ univalent hydrocarbon group other than a phenyl group, $R^3$ is a $C_1$ to $C_4$ univalent hydrocarbon group, $0.5 \leq m \leq 2.0, 0 \leq n \leq 0.9$, $0.42 \leq p \leq 2.5, 0 \leq q \leq 0.35$, and $0.92 \leq m + n + p + q \leq 2.8$). However, a resin composition that contains such a silicone alone has insufficient nonflammability, and in particular, is not enough to achieve adequate nonflammability.

Japanese Laid-Open Patent Application H8-225737 discloses a thermoplastic molding compound containing

(A) a thermoplastic aromatic polycarbonate, (B) a thermoplastic copolymer of (B-1) styrene, α-methylstyrene, styrene with an alkyl-substituted ring, $C_1$ to $C_8$ alkyl acrylate, $C_1$ to $C_8$ alkyl methacrylate, or a mixture of these and (B-2) acrylonitrile, methacrylonitrile, $C_1$ to $C_8$ alkyl acrylate, $C_1$ to $C_8$ alkyl methacrylate, maleic anhydride, N-substituted maleic acid imide, vinyl acetate, or a mixture of these, and/or a copolymer or polycondensate composed of [the above and] a thermoplastic polyalkylene terephthalate, (C) a graft polymer in which styrene, α-methylstyrene, styrene with an alkyl-substituted ring, $C_1$ to $C_8$ alkyl acrylate, $C_1$ to $C_8$ alkyl methacrylate, or a mixture of these and (C) [sic] acrylonitrile, methacrylonitrile, $C_1$ to $C_8$ alkyl acrylate, $C_1$ to $C_8$ alkyl methacrylate, maleic anhydride, N-substituted maleic acid imide, vinyl acetate, or a mixture of these are grafted on rubber with a glass transition temperature TG ≤ 10°C, (D) a hydroxyl-containing silicone resin expressed by $R_xSi(OR')_yO_{(4-x-y)/y}$ (where R is a univalent hydrocarbon group that may itself be substituted, and in particular is a methyl or phenyl group, R' is an alkyl group or hydrogen group *[sic],* x is a number from 0.75 to 1.75, and y is a number from 0.0001 to 0.5), with this silicone resin being made up of units expressed by the formula $SiO_{4/2}$, $RSiO_{3/2}$, $R_2SiO_{2/2}$, and/or $R_3SiO_{1/2}$ and (E) a phosphorus compound expressed by the following formula.

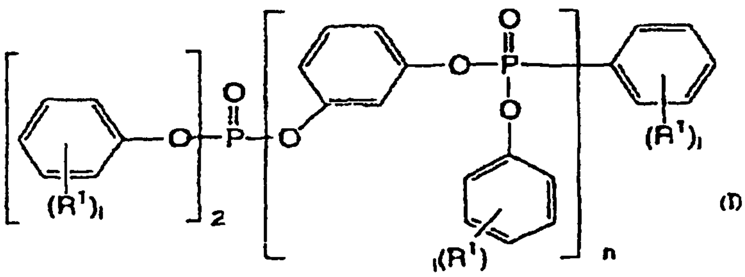

(I)

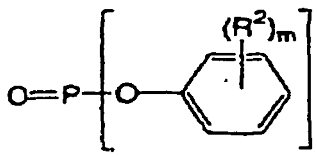

(II)

In the formula, n is an integer from 1 to 5, $R^1$ is a methyl group, is a number from 0 to 5, $R^2$ is a methyl group, and m is an integer from 0 to 5.

This resin composition discussed in Japanese Laid-Open Patent Application H8-225737, however, nonflammability is inadequate, and a large amount of phosphoric ester has to be used in order to achieve an acceptable level of nonflammability.

As a result of diligent study aimed at solving the above problems, the inventors discovered that a dramatic increase in the nonflammability of a resin composition can be achieved by using a specific phosphoric ester together with an alkoxy group-containing organopolysiloxane expressed by a specific compositional formula in a polycarbonate-based resin or a blend with another thermoplastic resin. In particular, the present invention was perfected upon attaining a high level of nonflammability while maintaining the heat resistance impact resistance, and hydrolysis resistance of a blend with another thermoplastic resin such as a styrene-butadiene-based blend by using a small amount of phosphoric ester and an alkoxy group-containing organopolysiloxane in this blend.

It is an object of the present invention to provide a nonflammable resin composition with high heat resistance, excellent impact resistance, excellent hydrolysis resistance, and also excellent nonflammability.

SUMMARY OF THE INVENTION

The nonflammable resin composition pertaining to the present invention is characterized by containing:

(A) a thermoplastic resin containing aromatic ring;
(B) a phosphoric ester expressed by the following formula:

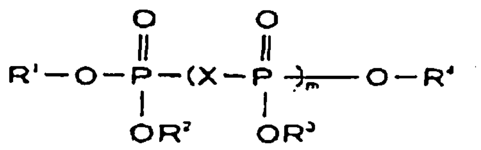

(where $R^1$, $R^2$, $R^3$, and $R^4$ are each independently a $C_1$ to $C_{30}$ hydrocarbon; X is a $C_1$ to $C_{30}$ divalent organic group that may contain an oxygen atom and/or a nitrogen atom; and m is an integer from 0 to 5); and
(C) an alkoxy group-containing organopolysiloxane expressed by the following average compositional formula:

$$R^1{}_aSi(OR^2)_bO_{(4-a-b)/2} \qquad (1)$$

(where $R^1$ is a substituted or unsubstituted univalent hydrocarbon group containing an aryl group and whose aryl group content is at least 20%; $R^2$ is a substituted or unsubstituted univalent hydrocarbon group; $R^1$ and $R^2$ may be the same as or different from each other; $0.2 \leq a \leq 2.7$; $0.2 \leq b \leq 2.4$; and $a + b < 3$), wherein the weight average molecular weight of the said alkoxy group containing organopolysiloxane is between 300 and 3000, and
said phosphoric ester (B) being contained in an amount of 0.1 to 40 weight parts and said alkoxy group-containing organopolysiloxane (C) in an amount of 0.01 to 20 weight parts per 100 weight parts of the thermoplastic resin containing aromatic ring (A), e.g., a polycarbonate-based resin.

It is preferable for the alkoxy group-containing organopolysiloxane (C) to include a branched structure, and $R^1$ is preferable to be methyl or phenyl.

The aromatic ring containing thermoplastic resins (A) can be

(A1) a polycarbonate-based resin,
(A2) a thermoplastic resin other than a polycarbonate-based resin, or alloy of (A1) and (A2).

It is preferable for the above-mentioned phosphoric ester to be bisphenol A-tetraphenyl diphosphate (BPADP) or bisphenol A tetracresyl diphosphate.

It is preferable for the thermoplastic resin (A-2) to be one or more types of resin selected from the group consisting of:

polymers including as a structural component (a) an aromatic vinyl monomer component;
copolymers including as structural components (a) an aromatic vinyl monomer component and (b) a vinyl cyanide monomer component;
copolymers including as structural components (a) an aromatic vinyl monomer component, (b) a vinyl cyanide monomer component, and (c) a rubber-like polymer;
aromatic polyesters;
polyphenylene ethers;
polyether imides; and
polyphenylene sulfides.

It is preferable for the thermoplastic resin (A-2) to be one or more types of resin selected from the group consisting of ABS resins, AES resins, ACS resins, AAS resins, and polystyrene resins.

It is preferable for the nonflarrunable resin composition pertaining to the present invention to further contain (D) an anti-drip agent in an amount of 0.01 to 10 weight parts per 100 weight parts of the polycarbonate-based resin (A-1) or per combined 100 weight parts of the polycarbonate-based resin (A-1) and the thermoplastic resin (A-2). Polytetrafluoroethylene (PTTE) is favorable as this anti-drip agent.

The nonflammable resin composition pertaining to the present invention may further contain (E) an alkali (alkaline earth) metal salt of a perfluoroalkanesulfonic acid in an amount of 0.01 to 3 weight parts per 100 weight parts of the polycarbonate-based resin (A-1) or per combined 100 weight parts of the polycarbonate-based resin (A-1) and the thermoplastic resin (A-2).

The electrical or electronic device part pertaining to the present invention is characterized by being formed from the above-mentioned nonflammable resin composition. The housing material pertaining to the present invention is also characterized by being formed from the above-mentioned nonflammable resin composition.

The present invention also relates to articles including electrical and electronic machines and housings formed

by the flame retardant resin composition mentioned above.

DETAILED DESCRIPTION OF THE INVENTION

The nonflammable resin composition of the present invention will now be described.

The nonflammable resin composition pertaining to the present invention is characterized by containing at least (A) an aromatic ring containing thermoplastic resin, (B) a phosphoric ester, and (C) an alkoxy group-containing organopolysiloxane.

Aromatic ring containing thermoplastic resin (A)

One embodiment of an aromatic ring containing thermoplastic resin is a polycarbonate-based resin (A-1). The polycarbonate-based resin (A-1) used in the present invention is an aromatic homopolycarbonate or aromatic copolycarbonate obtained by reacting an aromatic dihydroxy compound with a carbonate precursor. A carbonate-based resin has repeating structural units expressed by the following formula (1).

-(O-A-O-C)- (1)

In the above formula, A is a divalent residue derived from an aromatic dihydroxy compound.

Examples of aromatic dihydroxy compounds include mononuclear and polynuclear aromatic compounds that contain two hydroxy groups (functional groups) and in which each hydroxy group is directly bonded to a carbon atom of the aromatic ring.

The bisphenol compounds expressed by the following formula (2) are specific examples of aromatic dihydroxy compounds.

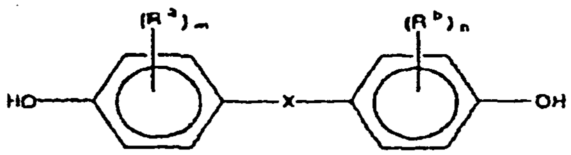 ··· (2)

(In the formula, $R^a$ and $R^b$ may be the same or different, and are each a halogen atom or a univalent hydrocarbon group; m and n are integers from 0 to 4;

x is 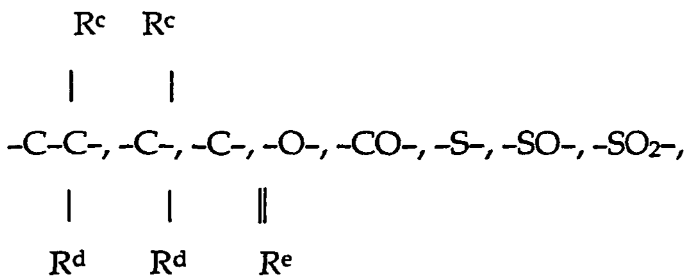

or

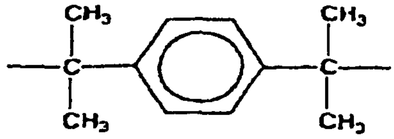

$R^c$ and $R^c$ are each a hydrogen atom or a univalent hydrocarbon group, and a cyclic structure may be formed from $R^c$ and $R^d$; and $R^e$ is a divalent hydrocarbon group.)

Specific examples of the aromatic dihydroxy compounds expressed by formula (2) include bis(hydroxyaryl) alkanes such as bis(4-hydroxyphenyl)methane, 1,1-bis(4-hydroxyphenyl)ethane, 2,2-bis(4-hydroxyphenyl)propane (also called bisphenol A), 2,2-bis(4-hydroxyphenyl)butane, 2,2-bis(4-hydroxyphenyl)octane, bis(4-hydroxyphenyl)phenylmethane, 2,2-bis(4-hydroxy-1-methylphenyl)propane,1,1-bis(4-hydroxy-tert-butylphenyl)propane, 2,2-bis(4-hydroxy-3-bromophenyl)propane, and 2,2-bis(4-hydroxy-3,5-dibromophenyl)propane; bis-(hydroxyaryl)cycloalkanes such as 1,1-bis (hydroxyphenyl)cyclopentane and 1,1-bis(4-hydroxyphenyl)cyclohexane; dihydroxyaryl ethers such as 4,4'-dihydroxydiphenyl ether and 4,4'-dihydroxy-3,3'-dimethylphenyl ether; dihydroxydiarylsulfides such as 4,4'-dihydroxydiphenylsulfide and 4,4'-dihydroxy-3,3'-dimethyldiphenylsulfide; dihydroxydiarylsulfoxides such as 4,4'-dihydroxydiphenylsulfoxide and 4,4'-dihydroxy-3,3'-dimethyldiphenylsulfoxide; and dihydroxydiarylsulfones such as 4,4'-dihydroxydiphenylsulfone and 4,4'-dihydroxy-3,3'-dimethyldiphenylsulfone.

Of these aromatic dihydroxy compounds, the use of 2,2-bis(4-hydroxyphenyl)-propane is especially desirable.

Other aromatic dihydroxy compounds that can be used besides those of the above-mentioned formula (2) are the aromatic dihydroxy compounds expressed by the following formula (3).

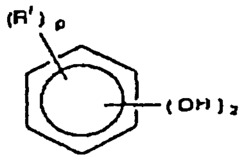

... (3)

Where each R' is independently a $C_1$ to $C_{10}$ hydrocarbon group, a halogen atom, or a halogenated hydrocarbon group in which at least one of said hydrocarbon groups has been substituted with a halogen atom, and p is an integer from 0 to 4.

Examples of these compounds include resorcinol; substituted resorcinols such as 3-methylresorcinol, 3-ethylresorcinol, 3-propylresorcinol, 3-butylresorcinol, 3-tert-butylresorcinol, 3-phenylresorcinol, 3-cumylresorcinol, 2,3,4,6-tetrafluororesorcinol, and 2,3,4,6-tetrabromoresorcinol; catechol; and hydroquinone and substituted hydroquinones such as 3-methylhydroquinone, 3-ethylhydroquinone, 3-propylhydroquinone, 3-butylhydroquinone, 3-tert-butylhydroquinone, 3-phenylhydroquinone, 3-cumylhydroquinone, 2,3,5,6-tetramethylhydroquinone, 2,3,5,6-tetra-tert-butylhydroquinone, 2,3,5,6-tetrafluorohydroquinone, and 2,3,5,6-tetrabromohydroquinone.

Another aromatic dihydroxy compound that can be used besides those of the above-mentioned formula (2) is the 2,2,2',2'-tetrahydro-3,3,3',3'-tetramethyl-1,1'-spirobi-[1H-inden]-7,7'-diol expressed by the following formula.

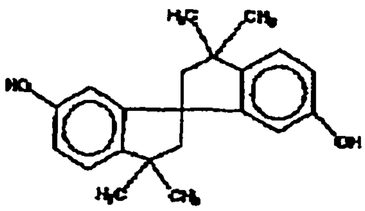

These aromatic dihydroxy compounds may be used singly or in combinations of two more types.

The polycarbonate may be either linear or branched. It may also be a blend of a linear polycarbonate and a branched polycarbonate.

A branched polycarbonate can be obtained by reacting a polyfunctional aromatic compound with an aromatic dihydroxy compound and a carbonate precursor. Typical examples of such polyfunctional aromatic compounds are listed in U.S. Patents 3,028,385, 3,334,154, 4.001,124, and 4,131,576. Specific examples include 1,1,1-tris(4-hydroxyphenyl) ethane, 2,2',2"-tris(4-hydroxyphenyl)diisopropylbenzene, (α-methyl-α,α',α'-tris(4-hydroxyphenyl)-1,4-diethylbenzene, α,α',α"-tris(4-hydroxyphenyl)-1,3,5-triisopropylbenzene, fluoroglycine, 4,6-dimethyl-2,4,6-tri(4-hydroxyphenyl)heptane-2,1,3,5-tri(4-hydroxyphenyl)benzene, 2,2-bis-[4,4-(4,4'-dihydroxyphenyl)-cyclohexyl]-propane, trimellitic acid, 1,3,5-benzenetricarboxylic acid, and pyromellitic acid. Of these, the use of 1,1,1-tris(4-hydroxyphenyl)ethane, α,α',α"-tris(4-hydroxyphenyl)-1,3,5-triisopropylbenzene, or the like is preferable.

There are no particular restrictions on the intrinsic viscosity of this polycarbonate-based resin as measured 25°C in methylene chloride, and it can be appropriately selected as dictated by the intended application and moldability,

but is usually at least 0.26 dL/g, and preferably 0.30 to 0.98 dL/g, and even more preferably 0.34 to 0.64 dL/g. When calculated as the viscosity average molecular weight, it usually should be at least 10,000, and preferably 12,000 to 50,000, and even more preferably 14,000 to 30,000. It is also possible to use a mixture of polycarbonate resins with different intrinsic viscosities. The viscosity average molecular weight (Mv) is found by measuring the intrinsic viscosity (limiting viscosity [number] η) at 20°C in methylene chloride, and then calculating from the Mark-Houwink viscosity equation:

$$\eta = K \times (Mv)^a \quad (K = 1.23 \times 10^{-4}, a = 0.83)$$

The polycarbonate-based resin used in the present invention is manufactured by a known method. Examples include the following.

(1) A method in which a polycarbonate is synthesized by subjecting an aromatic dihydroxy compound and a carbonate precursor (such as a carbonic diester) to an ester interchange reaction while molten (melt method).
(2) A method in which an aromatic dihydroxy compound and a carbonate precursor (such as phosgene) are reacted in a solution (interfacial method).

These manufacturing methods are discussed, for example, in Japanese Laid-Open Patent Applications H2-175723 and H2-124934, U.S. Patents 4,001,184, 4,238,569, 4,238,597, and 4,474,999, and elsewhere.
In one embodiment of the present invention, a thermoplastic resin other than a polycarbonate (A-2) may also be used along with the polycarbonate-based resin (A-1).

Thermoplastic resin other than a polycarbonate (A-2)

In yet another embodiment of the present invention, a thermoplastic resin other than a polycarbonate (hereinafter referred to merely as a thermoplastic resin) may be contained along with a polycarbonate. Any thermoplastic resin other than a polycarbonate can be used as the thermoplastic resin (A-2), with no particular restrictions thereon, but this is preferably one or more types of resin selected from the following group.

(1) polymers including as a structural component (a) an aromatic vinyl monomer component
(2) copolymers including as structural components (a) an aromatic vinyl monomer component and (b) a vinyl cyanide monomer component
(3) copolymers including as structural components (a) an aromatic vinyl monomer component, (b) a vinyl cyanide monomer component, and (c) a rubber-like polymer
(4) aromatic polyesters
(5) polyphenylene ethers
(6) polyether imides
(7) polyphenylene sulfides

All of the resins listed above can be purchased as commercial products, and there are no particular restrictions on the manufacturing method, etc.
(Co)polymer (1). First, the polymers including (a) an aromatic vinyl monomer component (1) will be described.
Examples of the aromatic vinyl monomer component (a) include styrene, α-methylstyrene, o-, m-, or p-methylstyrene, vinylxylene, monochlorostyrene, dichlorostyrene, monobromostyrene, dibromostyrene, fluorostyrene, p-tert-butylstyrene, ethylstyrene, and vinylnaphthalene. The polymer used in the present invention may be a homopolymer of one of these, or it may be a copolymer of two or more different monomers. Of these monomers, styrene and α-methylstyrene are particularly favorable. A favorable example of a polymer is a styrene resin.
There are no particular restrictions on the method for manufacturing this (co)polymer, and any ordinary known method can be employed, such as bulk polymerization, solution polymerization, bulk suspension polymerization, suspension polymerization, and emulsion polymerization. The desired (co)polymer can also be obtained by blending separately polymerized resins.
Copolymer (2) Next, the copolymers including (a) an aromatic vinyl monomer component and (b) a vinyl cyanide monomer component (2) will be described.
Examples of the aromatic vinyl monomer component (a) are the same as above. Examples of the vinyl cyanide monomer component (b) include acrylonitrile and methacrylonitrile. One of more types of these components may be contained in the copolymer.

There are no particular restrictions on the compositional ratio (a)/ (b), which should be selected according to the application. (a)/(b) is preferably such that (a) accounts for 50 to 95 wt% and (b) for 5 to 50 wt%, and even more preferably such that (a) accounts for 65 to 92 wt% and (b) for 8 to 35 wt%.

A favorable example of the above-mentioned polymer is an SAN resin (styrene-acrylonitrile copolymer). There are no particular restrictions on the method for manufacturing this copolymer, and any ordinary known method can be employed, such as bulk polymerization, solution polymerization, bulk suspension polymerization, suspension polymerization, and emulsion polymerization. The desired copolymer can also be obtained by blending separately polymerized resins.

Copolymer (3) Next, the copolymers including (a) an aromatic-vinyl monomer component, (b) a vinyl cyanide monomer component, and (c) a rubber-like polymer (3) will be described. Examples of the aromatic vinyl monomer component (a) and the vinyl cyanide monomer component (b) are the same as above.

Examples of the rubber-like polymer (c) include polybutadiene, polyisoprene, styrene-butadiene random copolymers and block copolymers, butadiene-isoprene copolymers, and other diene-based rubbers; ethylene-propylene random copolymers and block copolymers, copolymers of ethylene and $\alpha$-olefins, ethylene-methacrylate, ethylene-butyl acrylate, and other copolymers of ethylene and unsaturated carboxylic esters; acrylic ester-butadiene copolymers, such as a butyl acrylate-butadiene copolymer, and other acrylic elastomeric polymers; ethylene-vinyl acetate and other copolymers of ethylene and a fatty acid vinyl [salt]; ethylene-propylene-hexadiene copolymers and other ethylene-propylene non-conjugated diene terpolymers; butylene-isoprene copolymers, and chlorinated polyethylene. These can be used singly or in combinations. Preferable rubber-like polymers are ethylene-propylene non-conjugated diene terpolymers, diene rubbers, and acrylic elastomeric polymers, with polybutadiene and styrene-butadiene copolymers being particularly favorable. The styrene content in these is preferable 50 wt% or less.

This copolymer (3) is preferably a graft copolymer obtained by the graft polymerization of other components in the presence of the rubber-like polymer (c). It is particularly favorable for it to be a resin selected from among ABS resins (acrylonitrile-butadiene-styrene copolymers), AES resins (acrylonitrile-ethylene-styrene copolymers), ACS resins (acrylonitrile-chlorinated polyethylene-styrene copolymers), and AAS resins (acrylonitrile-acrylic elastomer-styrene copolymers).

The weight average molecular weight (Mw) of the above-mentioned (co)polymer (1) and copolymers (2) and (3) is preferably 30,000 to 200,000, with 30,000 to 150,000 being even better, and 30,000 to 110,000 being particularly good.

To the extent that the object of the present invention is not compromised, monomers that are copolymerizable with the above-mentioned components (a), (b), and (c) may also be copolymerized with these components in the above-mentioned (co)polymer (1) and copolymers (2) and (3). Examples of such copolymerizable monomers include acrylic acid, methacrylic acid, and other $\alpha,\beta$-unsaturated carboxylic acids, methyl (meth)acrylate, ethyl (meth)acrylate, propyl (meth)acrylate, butyl (meth)acrylate, 2-ethyl (meth)acrylate, 2-ethylhexyl methacrylate, and other $\alpha,\beta$-unsaturated carboxylic esters; maleic anhydride, itaconic anhydride, and other $\alpha,\beta$-unsaturated dicarboxylic anhydrides; and maleimide, N-methylmaleimide, N-ethylmaleimide, N-phenylmaleimide, N-o-chlorophenylmaleirnide, and other $\alpha,\beta$-unsaturated dicarboxylic acid imide compounds. These monomers may be used singly or in combinations.

There are no particular restrictions on the method for manufacturing this copolymer, and it can be manufactured by bulk polymerization, bulk suspension polymerization, or solution polymerization.

Aromatic polyesters (4) Aromatic polyesters are themselves known, and are polyesters having an aromatic ring at a chain unit of the polymer. These polymers and copolymers are obtained by a polycondensation reaction in which the main components are an aromatic dicarboxylic acid and a diol (or an ester-forming derivative thereof).

Examples of aromatic dicarboxylic acids include terephthalic acid, isophthalic acid, ortho-phthalic acid, 1,5-naphthalenedicarboxylic acid, naphthalene-2,5-dicarboxylic acid, naphthalene-2,6-dicarboxylic acid, biphenyl-2,2'-dicarboxylic acid, biphenyl-3,3'-dicarboxylic acid, biphenyl-4,4'-dicarboxylic acid, biphenylsulfone-4,4'-dicarboxylic acid, diphenylisopylidene-4,4'-dicarboxylic acid, 1,2-bis(phenoxy)ethane-4,4'-dicarboxylic acid, anthracene-2,5-dicarboxylic acid, anthracene-2,6-dicarboxylic acid, p-terphenylene-4,4'-dicarboxylic acid, and pyridine-2,5-didicarboxylic acid. Terephthalic acid is preferable.

These aromatic dicarboxylic acids may also be used as a mixture of two or more types. Also, as long as the amount is small, one or more aliphatic dicarboxylic acids, such as adipic acid, azelaic acid, dodecandioic acid, and sebacic acid, or one or more alicyclic dicarboxylic acids, such as cyclohexanedicarboxylic acid, can be mixed in with the above aromatic dihydroxy acids.

Examples of diol components include ethylene glycol, propylene glycol, butylene glycol, hexylene glycol, neopentyl glycol, 2-methylpropane-1,3-diol, diethylene glycol, triethylene glycol, and other aliphatic diols, and cyclohexane-1,4-dimethanol, and other alicyclic diols, as well as mixtures of these. Also, as long as the amount is small, one or more types of long-chain diol with a molecular weight of 400 to 6000, such as polyethylene glycol, poly-1,3-propylene glycol, or polytetramethylene glycol, can be copolymerized.

Specific examples of aromatic polyester resins include polyethylene terephthalate (PET), polypropylene terephthalate, polybutylene terephthalate (PBT), polyethylene naphthalate, polybutylene naphthalate, polyethylene-1,2-bis (phenoxy)ethane-4,4'-dicarboxylate, and polycyclohexanedimethanol terephthalate. Of these, PBT and PET are preferred.

Polyphenylene ether (5)-Polyphenylene ether (PPE) is a known resin having substituted or unsubstituted phenylene ether repeating units. Specific examples include poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dimethoxy-1,4-phenylene) ether, poly(2,6-dichloromethyl-1,4-phenylene) ether, poly(2,6-dibromomethyl-1,4-phenylene) ether, poly(2,6-diphenyl-1,4-phenylene) ether, poly(2,6-ditolyl-1,4-phenylene) ether, poly(2,6-dichloroyl-1,4-phenylene) ether, poly(2,6-dibenzyl-1,4-phenylene) ether, and poly(2,6-dimethyl-1,4-phenylene) ether.

The PPE copolymer can be a copolymer containing an alkyl-trisubsituted phenol, such as 2,3,6-trimethylphenol, in some of the phenylene ether repeating units. It may also be a copolymer in which a styrene compound has been grafted to a PPE. Styrene compound-grafted polyphenylene ether include copolymers obtained by the graft polymerization of one of the above-mentioned PPE's with a styrene compound such as styrene, $\alpha$-methylstyrene, vinyltoluene, or chlorostyrene. PPE is commercially available under the trademark Noryl, made by GE Plastics Japan.

Polyether imide (6) Polyether imide is a known resin, an example of which is Ultem, a trademark of GE Plastics Japan.

Polyphenylene sulfide (7) Polyphenylene sulfide (PPS) is a known resin having substituted or unsubstituted phenylene sulfide repeating units. Examples include those available from Phillips Petroleum, Tosoh Susteel [uncertain spelling], Tohpren, Kureha Chemical, and so on.

Copolymers (1) and (3) are preferable as the thermoplastic resin used in the present invention, and it is even more favorable to use a resin selected from among HIPS (high impact polystyrene), ABS resins (acrylonitrile-butadiene-styrene copolymers), AES resins (acrylonitrile-ethylene-styrene copolymers), ACS resins (acrylonitrile-chlorinated polyethylene-styrene copolymers), and AAS resins (acrylonitrile-acrylic elastomer-styrene copolymers). ABS resins and HIPS are particularly favorable.

It is favorable for this thermoplastic resin (A-2) to be such that its weight ratio (A-1:A-2) with the polycarbonate-based resin (A-1) is 99:1 to 1:99, and preferably 30:70 to 70:30.

Phosphoric ester (B) A compound expressed by the following formula is used as the phosphoric ester.

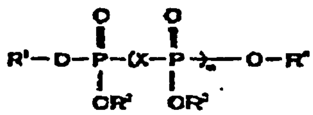

In the formula, $R^1$, $R^2$, $R^3$, and $R^4$ are each independently a hydrocarbon group with 1 to 30 carbon atoms, and preferably 1 to 5, and preferably a substituted or unsubstituted aromatic hydrocarbon group. If it is substituted, examples of substituents include alkyl groups, alkoxy groups, alkylthio groups, halogens, aryl groups, and aryloxy groups.

Examples of $R^1$, $R^2$, $R^3$, and $R^4$ here include a phenyl group, cresyl group, xylenyl group (such as a 2,6-xylenyl group), trimethylphenyl group, ethylphenyl group, cumyl group, and butylphenyl group. If a hydrocarbon group is thus contained, the resulting resin composition will have particularly outstanding flame retardancy.

X is a $C_1$ to $C_{30}$ divalent organic group that may contain an oxygen atom and/or a nitrogen atom. This X is, for instance, -O-$Y^1$-O- (where $Y^1$ is a substituted or unsubstituted aromatic hydrocarbon group, and preferably a 1,4-phenylene group, 1,3-phenylene group, etc.) or -O-$Y^2$-$R^5$-$Y^3$-O- (where $Y^2$ and $Y^3$ are divalent substituted or unsubstituted aromatic hydrocarbon groups, specific examples of which include substituted or unsubstituted phenylene groups; and $R^5$ is a $C_1$ to $C_8$ divalent hydrocarbon group or an oxy hydrocarbon group (-$R^6$-O-; where $R^6$ is a $C_1$ to $C_8$ divalent hydrocarbon group), and more specifically is a $C_1$ to $C_9$ divalent, aliphatic hydrocarbon group, such as a 2,2'-propylene group). X may be an organic group in which a nitrogen atom is bonded directly to a phosphorus atom, an example of which is a 1,4-piperadinyl group (following formula).

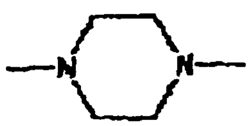

m is an integer from 0 to 5.

Favorable phosphoric esters include bisphenol A tetraphenyl diphosphate (BPADP), triphenyl phosphate, tricresyl phosphate, cresyldiphenyl phosphate, bisphenol A tetracresyl diphosphate, resorcinol tetrakis(2,6-dimethylphenyl) phosphate, and tetraxylylpiperidine phosphoramide. Of these, bisphenol A tetraphenyl diphosphate (BPADP) and bisphenol A tetracresyl diphosphate are preferable as the phosphoric ester.

The addition of this phosphoric ester (B) allows a molded article with superior flame retardancy to be obtained.

The amount in which the phosphoric ester (B) is compounded in the flame retardant resin composition of the present invention is preferably 0.5 to 15 weight parts, and even more preferably 0.5 to 10 weight parts, per 100 weight parts of the polycarbonate-based resin (A-1) when the aqueous solution is used by itself, or per combined 100 weight parts of (A-1) and (A-2) when the polycarbonate-based resin (A-1) and the thermoplastic resin (A-2) are used together. The flame retardancy effect will be inadequate if the amount of phosphoric ester is less than 0.5 weight parts, but the original characteristics of the resin may be lost if 20 weight parts is exceeded.

Alkoxy group-containing organopolysiloxane (C)An alkoxy group-containing organopolysiloxane expressed by the following average compositional formula (1) is used as the silicone of component (C).

$$R^1_aSi(OR^2)_bO_{(4-a-b)/2} \qquad (1)$$

In the formula, $R^1$ is a substituted or unsubstituted univalent hydrocarbon group containing an aryl group and whose aryl group content is at least 20%, $R^2$ is a substituted or unsubstituted univalent hydrocarbon group, and $R^1$ and $R^2$ may be the same as or different from each other. $0.2 \leq a \leq 2.7$, 0.2 S b $\leq 2.4$, and $a + b < 3$.

Examples of $R^1$ include a methyl group, ethyl group, propyl group, butyl group, hexyl group, and other alkyl groups; vinyl group, propenyl group, butenyl group, and other alkenyl groups; phenyl group, biphenyl group, naphthalene, and other aryl groups; cyclohexyl group, cyclooctyl group, and other cycloalkyl groups; and groups in which the hydrogen atoms bonded to carbon atoms in the above groups have been substituted with halogen atoms, cyano groups, amino groups, or the like, such as a chloromethyl group, 3,3,3-trifluoropropyl group, cyanomethyl group, γ-aminopropyl group, N-(β-aminoethyl)-γ-aminopropyl group, and so forth. From the standpoints of ease or synthesis or availability, or of the safety of the silicone compound, a methyl group, ethyl group, or phenyl group is preferred for industrial purposes.

The silicone compound that is component C contains an aryl group (phenyl group) as an essential component among the $R^1$ groups. The aryl group content (phenyl group content) is at least 20%. Below this amount, dispersibility in the polycarbonate-based resin will be poor, condensation between the aromatics will also be less apt to occur during burning, and the burning effect may decrease. It is particularly favorable for the aryl group content to be at least 50%. If the aryl group content is over 90%, volumetric hindrance between the aromatic groups will lower the spatial freedom of the organopolysiloxane molecules and prevent their free movement within the resin, and this may preclude a significant flame retardancy effect from being attained.

Examples of $R^2$ include the methyl group, ethyl group, propyl group, butyl group, and hexyl group. A methoxy group, ethoxy group, or propoxy group can be used to advantage as the alkoxy group because of their good reactivity and ease of handling in an industrial setting. The alkoxy group could be an silanol group (SiOH), but silanol is easy to form agglomeration within the silicone. Therefore, it is desirable to control the amount of the silanol. In one embodiment of the invention, the silanol is kept below 10 mol %, relative to the total amount of alkoxy and silanol groups.

A characteristic of the present invention is that there is a dramatically synergistic effect on flame retardancy when a phosphoric ester is used together with one of the above-mentioned alkoxy group-containing organopolysiloxanes. The same effect cannot be achieved with either a phosphoric ester or an organopolysiloxane when added alone.

It is believed that the alkoxy groups in the organopolysiloxane used in the present invention impart activity to the silicone compound, and therefore contribute to a synergistic flame retardant effect when used together with a phosphoric ester. In one embodiment, the ratio of alkoxy moles to all substituent group moles is kept within the range of 10%-70%. In another embodiment, it is kept between 20% and 50%. If it is less than 10%, the activity of the organopolysiloxane may be so low that an adequate flame retardant effect cannot be achieved, but if 50% is exceeded, the heat resistance of the organopolysiloxane itself may decrease, which would also lower the flame retardant effect.

The weight average molecular weight of the alkoxy group-containing organopolysiloxane serving as component C is between 300 to 3000. In another embodiment, between 300 and 2000. If the molecular weight is too low, then the organopolysiloxane will tend to bleed onto the molded article surface after mixing with the resin composition, so there may be a decrease in the flame retardant effect. If the molecular weight is too high, though, the dispersibility of the organopolysiloxane into the resin will be poor, and the organopolysiloxane will move around with difficulty, so there may again be a decrease the flame retardant effect.

It is preferable for the alkoxy group-containing organopolysiloxane used in the present invention to include a branched structure. The term "branched structure" as used here means that three or four siloxane residues are bonded to a single silicon atom of the organopolysiloxane. More specifically, it refers to a case when any of the following structural units is included.

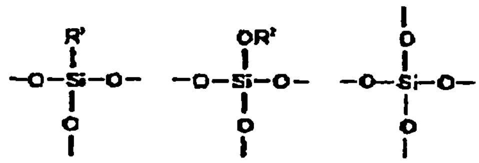

($R^1$ and $R^2$ are defined the same as in formula 1 above.)

It is preferable for the following structural unit (c-1) or (c-2) to be included in addition to the branched structure in the alkoxy group-containing organopolysiloxane used in the present invention.

$R^1{}_1Si(OR^2)_2O_{0.5}$ (c-1)

$R^1{}_1Si(OR^2)O$ (c-2)

($R^1$ and $R^2$ are defined the same as in formula 1 above.)

The alkoxy group-containing organopolysiloxane may also include the following structural unit (c-3) or (c-4) in addition to the branched structure.

$Si(OR^2)_2O$ (c-3)

$Si(OR^2)_3O_{0.5}$ (c-4)

($R^1$ and $R^2$ are defined the same as in formula 1 above.)

The alkoxy group-containing organopolysiloxane used in the present invention may further include a bifunctional unit (c-5) in which two hydrocarbon groups are bonded to a single silicon atom, or monofunctional units (c-6) and (c-7) in which three hydrocarbon groups are bonded to a single silicon atom, as shown by the following formulas.

$R^1{}_2SiO$ (c-5)

$R^1{}_2Si(OR^2)O_{0.5}$ (c-6)

$R^1{}_3SiO_{0.5}$ (c-7)

($R^1$ and $R^2$ are defined the same as in formula 1 above.)

The structural units expressed by these formulas (c-5) to (c-7) are contained in the organopolysiloxane in an amount of no more than 85 mol%. In one embodiment, it is no more than 50 mol%. If a large amount of bifunctional or monofunctional units are included, the heat resistance and crosslinking activity of the organopolysiloxane may be lower, which would decrease the flame retardancy.

This organopolysiloxane can be any such commercially available product, with no particular restrictions imposed thereon. The organopolysiloxane can also be manufactured by a known method. For instance, the targeted alkoxy group-containing organopolysiloxane can be manufactured by subjecting an organoalkoxysilane or an organochlorosilane capable for forming siloxane units to a alkoxy reaction and hydrolysis and condensation reaction with the existing of water and alcohol.

In one embodiment, the amount in which the organopolysiloxane of component C is compounded with the flame retardant resin composition of the present invention is 0.01 to 20 weight parts. In another embodiment, the amount is 0.05 to 10 weight parts, per 100 weight parts of the polycarbonate-based resin (A-1) or per combined 100 weight parts of the polycarbonate-based resin (A-1) and the thermoplastic resin (A-2). If the amount of organopolysiloxane is less than 0.05 weight part, sufficient flame retardancy cannot be imparted, but exceeding 10 weight parts will have an adverse effect on the appearance and strength of the molded article. None of these organopolysiloxanes generates harmful gas when burned.

If needed, the flame retardant resin composition pertaining to the present invention may further contain (D) an anti-drip agent, (E) a alkali (alkaline earth) metal salt of a perfluoroalkanesulfonic acid.

Anti-drip agent (D) The resin composition of the present invention includes an anti-drip agent. An anti-drip agent is an additive that serves to inhibit dripping during burning, and any known agent can be used. With the present invention, one that forms a fibril structure in the polycarbonate-based resin, typified by polytetrafluoroethylene (PTFE) and tetrafluoroethylene copolymers (such as a polytetrafluoroethylene/hexafluoropropylene copolymer), is favorable

because it inhibits dripping better.

Of the various types of polytetrafluoroethylene (PTFE) available, one that has excellent dispersibility, such as one in which PTFE is emulsified and dispersed in a solution of water or the like, or one in which the PTFE has been encapsulated with a resin typified by polycarbonates and styrene-acrylonitrile copolymers, or a master batch of PTFE and a resin typified by polycarbonates and styrene-acrylonitrile copolymers, is preferred because it will impart a good surface appearance to the molded article composed of the polycarbonate composition.

A polyphenylene ether (PPE) may also be used together with the above-mentioned polytetrafluoroethylene as the anti-drip agent (D) in the present invention.

Furthermore, an inorganic anti-drip agent may be used together with the above-mentioned polytetrafluoroethylene as an anti-drip agent. Examples of inorganic anti-drip agents include silica, quartz, aluminum silicate, mica, alumina, aluminum hydroxide, calcium carbonate, talc, silicon carbide, silicon nitride, boron nitride, titanium oxide, iron oxide, and carbon black.

The anti-drip agent is added in an amount of 0.01 to 10 weight parts, and preferably 0.05 to 2 weight parts, and even more preferably 0.1 to 0.5 weight part, per 100 weight parts of the polycarbonate-based resin (A-1) when the polycarbonate-based resin (A-1) is used by itself, or per combined 100 weight parts of the polycarbonate-based resin (A-1) and the thermoplastic resin other than a polycarbonate-based resin (A-2) when the polycarbonate-based resin (A-1) and the thermoplastic resin other than a polycarbonate-based resin (A-2) are used together.

Specific examples of commercially available PTFE include Teflon 30J (trademark of Mitsui DuPont Fluorochemical), Polyflon D-2C (trademark of Daikin Chemical Industries), and Aflon AD1 (trademark of Asahi Glass).

<u>Alkali (alkaline earth) metal salt of a perfluoroalkanesulfonic acid (E).</u>

A perfluoroalkanesulfonic acid is used as component E in the resin composition of the present invention.

The alkali (alkaline earth) metal salt of a perfluoroalkanesulfonic acid is a sulfonic acid metal salt preferably having $C_1$ to $C_{19}$, and even more preferably $C_4$ to $C_8$, perfluorqalkane groups. Examples of alkali (alkaline earth) metals include sodium, potassium, lithium, cesium, rubidium, beryllium, magnesium, calcium, strontium, and barium. Of these, sodium and potassium are preferable, and potassium is especially good.

Examples of this alkali (alkaline earth) metal salt of a perfluoroalkanesulfonic acid include a sodium salt of perfluorobutanesulfonic acid, a potassium salt of perfluorobutanesulfonic acid, a sodium salt of perfluoromethylbutanesulfonic acid, a potassium salt of perfluoromethylbutanesulfonic acid, a sodium salt of perfluoro-octanesulfonic acid, and a potassium salt of perfluoro-octanesulfonic acid, with potassium perfluorobutanesulfonate being particularly favorable.

The alkali (alkaline earth) metal salt of a perfluoroalkanesulfonic acid (G)[sic] should be used in an amount of 0.01 to 3 weight parts, and preferably 0.01 to 0.1 weight part, and even more preferably 0.02 to 0.09 weight part, and more preferably still 0.03 to 0.08 weight part, per 100 weight parts polycarbonate.

<u>Other components</u> The resin composition of the present invention may further contain a UV absorbent, a hindered phenol-based antioxidant, a mold release additive, or the like. Examples of UV absorbents include benzotriazole-based UV absorbents, benzophenone-based UV absorbents, and salicylate-based UV absorbents. As mold release additives, well known stearate can be used.

Known additives may also be added to the flame retardant resin composition pertaining to the present invention, to the extent that the properties thereof are not compromised, during the mixing or molding of the resin composition as dictated by the intended application. Examples include colorants (pigments and dyes such as carbon black and titanium oxide), fillers, reinforcing agents (glass fiber, carbon fiber, talc, clay, mica, glass flakes, milled glass, glass beads), lubricants, plasticizers, flame retardants, and fluidity improvers.

There are no particular restrictions on the method for manufacturing the resin composition of the present invention, and any known method can be used. A melt mixing method is particularly favorable. A small amount of solvent may also be added in the manufacture of the resin composition.

Examples of the mixing apparatus include an extruder, a Banbury mixer, a roller, and a kneader, which can be operated continuously or in batches. There are no particular restrictions on the order in which the components are mixed.

The flame retardant resin composition pertaining to the present invention has outstanding flame retardancy and does not drip when it does burn.

For example, the flame retardant resin composition pertaining to the present invention was used to produce a test piece with a thickness of 1/16 inch, this was tested according to the test method set forth in Bulletin 94 of the Underwriters' Laboratory Corporation, "Burn Test for Material Classification" (hereinafter referred to as UL-94), and the V rating of UL-94 was given, whereupon the test piece passed the V-0 rating of UL-94. The various V rating criteria in UL-94 are summarized in Table 1 below.

[Table 1]

| | V-0 | V-1 | V-2 |
|---|---|---|---|
| Afterflame of each sample | 10 seconds or less | 30 seconds or less | 30 seconds or less |
| Overall afterflame of 5 samples | 50 seconds or less | 250 seconds or less | 250 seconds or less |
| Ignition of cotton by dripping | no | no | yes |

The flame retardant resin composition pertaining to the present invention can be molded into the desired shape using any molding method, such as injection molding, extrusion molding, or blow molding.

The molded article obtained in this manner will have excellent impact resistance, as well as high heat resistance, and furthermore will have excellent flame retardancy. Accordingly, a molded article of the resin composition of the present invention is suitable for the outer panels of office automation equipment and consumer electrical and electronic goods, housing materials, and electronic and electrical device parts.

Because it contains a specific silicone resin along with a specific phosphoric ester, the flame retardant resin composition of the present invention affords a high degree of flame retardancy without sacrificing impact resistance or moldability, and because it contains no flame retardant composed of chlorine, bromine, or the like, there is no danger that it will generate gas containing halogens originating in said flame retardant when burned, and therefore also provides excellent performance in terms of environmental protection. Furthermore, if a specific epoxy-based stabilizer is added, it will enhance the hydrolysis resistance of the polycarbonate-based resin itself, making it possible to produce a molded article with superior coloring and impact resistance.

Accordingly, this flame retardant resin composition is extremely useful in applications that demand high heat resistance, such as television sets, printers, copiers, facsimile machines, personal computers, and other such consumer electrical devices, housing materials and parts for office automation equipment, battery packs, liquid crystal reflectors, automotive interior materials, and so forth.

EXAMPLES. The present invention will now be described in further detail through examples, but the present invention is not limited in any way by these examples.

Unless otherwise specified, all "parts" in the examples are weight parts, and all percentages are weight percent.

The following compounds were used for the various components.

(1) Polycarbonate-based resin (PC):

Bisphenol A polycarbonate: Lexan (trademark of GE Plastics Japan); melt flow index measured at 300°C and a load of 1.2 kg: 12.3 g/10 minutes; intrinsic viscosity measured at 25°C in methylene chloride: 0.49 dL/g; viscosity average molecular weight (Mv): 21,760 (calculated value)

(2) ABS resin:

An ABS resin commercially available from GE Plastics, having a rubber content of 20%, and MI of 2.0 g/10 minutes

(3) Silicone:

Five silicones were used.

(C-1) $Ph_{1.4}(CH_3)_{0.3}Si(OCH_3)_{0.8}O_{0.75}$(MW=600)
(C-2): $Ph_{1.1}(CH_3)_{0.6}Si(OCH_3)_{0.7}O_{0.8}$(Mw=900)
(C-3): Pho.4$(CH_3)_{1.3}Si(OCH_3)$0.9$O_{0.7}$(Mw=1000)
(C-4): $Ph_{1.2}(CH_3)_{0.4}Si(0CH_3)_{0.5}O_{0.95}$(Mw=800)
(C-5): $(CH3)_{1.0}Si(OCH_3)_{0.7}O_{0.12}$(Mw=1200)

(Ph is a phenyl group.)

(4) Phosphoric ester compound:

Bisphenol A-tetraphenyl phosphate (BPADP), CR741S (trademark of Daihachi Chemical)

(5) Polytetrafluoroethylene (PTFE):

Polyflon D-2C (trademark of Daikin Chemical Industries). PTFE emulsified and dispersed in water, with a PTFE content of 60%. Polyflon D-2C was added in an amount of 0.5% with respect to the polycarbonate-based resin, and the actual PTFE added was 0.3%. The water was volatilized during the resin composition preparation.

Example 1. 90 weight parts polycarbonate 90,10 weight parts ABS resin, 1 weight part phosphoric ester, 1 weight part alkoxy group-containing organopolysiloxane (C-1), and 0.5 weight part PTFE were mixed and put in a twin-screw extruder made by The Japan Steel Works, Ltd. The mixture was extruded at a screw speed of 300 rpm and a barrel temperature of 240 to 250°C, and was cut off at a specific length to manufacture pellets. These pellets were used in the injection molding of a test piece of a specific size from a 100-ton injection molding machine at a barrel temperature of 260°C and a mold temperature of 50°C. The molded article thus obtained (1.6 mm in thickness) was subjected to the flame retardancy test set forth in UL-94. The burn time is the combined burn time for five samples.

Impact resistance was evaluated by measuring the 1/8-inch notched Izod impact strength according to ASTM D256. The deflection temperature under load (HDT) was measured using a 127 x 12.7 x 6.4 mm test piece, at a load of 18.6 kg and a temperature elevation rate of 2°C/minute according to ASTM D648. Hydrolysis characteristic: the initial weight average molecular weight of the polycarbonate in the prepared resin composition and weight average molecular weight of the polycarbonate in the resin composition that was kept under 100 RH atmosphere of 121°C for 48 hours was measured. The measurement of weight average molecular weight was carried out by GPC. Moreover, weight average molecular weight being low means the anti-hydrolysis characteristic is low.

These results are given in Table 2.

Examples 2 to 5 Other than using the compositions shown in Table 2, pellets were produced and characteristics evaluated in the same manner as in Example 1. These results are given in Table 2.

Comparative Examples 1 to 7. Other than using the compositions shown in Table 2, pellets were produced and characteristics evaluated in the same manner as in Example 1. These results are given in Table 2.

| | Exam.1 | Comp. examp.1 | Comp. examp.2 | Comp. examp.3 | Exam.2 | Exam.3 | Exam.4 | Exam.5 | Comp. examp.4 | Comp. examp.5 | Comp examp.6 | Comp. examp.7 |
|---|---|---|---|---|---|---|---|---|---|---|---|---|
| | | | | | | | | | | | | |
| Polycarbonate (A 1) | 84 | 84 | 84 | 84 | 90 | 90 | 90 | 90 | 90 | 90 | 90 | 84 |
| ABS(A 2) | 10 | 10 | 10 | 10 | 5 | 5 | 5 | 5 | 5 | 5 | 5 | 10 |
| BPADP(B) | 4 | 4 | 5 | 6 | 3 | 3 | 3 | 3 | 3 | 3 | 5 | |
| Silicone (C1) | 1 | | | | 0.5 | | | | | | | 4 |
| Silicone (C2) | | | | | | 0.5 | | | | | | |
| Silicone (C3) | | | | | | | 0.5 | | | | | |
| Silicone (C4) | | | | | | | | 0.5 | | | | |
| Silicone (C5) | | | | | | | | | 0.5 | | | |
| PTFE (D) | 0.5 | 0.5 | 0.5 | 0.5 | 0.5 | 0.5 | 0.5 | 0.5 | 0.5 | 0.5 | 0.5 | 0.5 |
| Impact resistance IZOD (kg • cm/cm) | 77 | 77 | 69 | 44 | 50 | 50 | 50 | 50 | 50 | 80 | 25 | 85 |
| Heat Deflection Temperature under loading (°C) | 111 | 113 | 110 | 106 | 116 | 116 | 116 | 116 | 116 | 117 | 112 | 116 |
| Initial PC molecular weight | 45000 | 45000 | 45000 | 45000 | 45000 | 45000 | 45000 | 45000 | 45000 | 45000 | 45000 | 45000 |
| After aging PC molecular weight | 43000 | 43000 | 40000 | 35000 | 43000 | 43000 | 43000 | 43000 | 43000 | 43000 | 40000 | 43000 |

(continued)

| | Exam.1 | Comp. examp.1 | Comp. examp.2 | Comp. examp.3 | Exam.2 | Exam.3 | Exam.4 | Exam.5 | Comp. examp.4 | Comp. examp.5 | Comp examp.6 | Comp. examp.7 |
|---|---|---|---|---|---|---|---|---|---|---|---|---|
| Burn time of 1.5mm thickness sample UL94 (Sec) | 39 | 80 | 52 | 40 | 28 | 33 | 35 | 33 | 70 | 50 | 26 | 150 |
| UL rating | V-0 | V-1 | V 1 | V-0 | V-0 | V-0 | V-0 | V-0 | V 1 | V-1 | V-0 | V-2 |

As is clear from Table 2, the flame retardant resin compositions of Examples 1 to 5 have high impact resistance and excellent heat resistance (HDT), flame retardancy, as well as hydrolysis resistance. In contrast, there is almost no flame retardancy effect when a phosphoric ester is used together with a silicone that contains no phenyl groups, as in Comparative Example 4.

In comparative Examples 1-3 and 5-6, there is no desirable balance / synergy of flame retardancy, heat resistance, impact and hydrolysis resistance, with the gain in one physical property resulting in the loss of another physical property. Comparing Example 1 (using phosphoric ester and siloxane as combination) and comparative example 3 (no siloxane and high phosphoric ester), it is found that the use of siloxane allows less flame retardant to be used. The results being a surprisingly synergistic and excellent balance of flame retardancy, heat resistance, impact resistance and as well as hydrolysis resistance. In Comparative Example 7, with silicone containing phenyl groups alone being used, the results being inadequate flame retardancy.

Therefore, it can be seen that when a phosphoric ester is used together with a specific silicone, there is a synergistic effect on flame retardancy, and a resin composition with extremely high flame retardancy is obtained.

## Claims

1. A polycarbonate-based nonflammable resin composition, **characterized by** containing:

   a. a polycarbonate-based resin (A-1);
   b. a phosphoric ester (B) expressed by the following

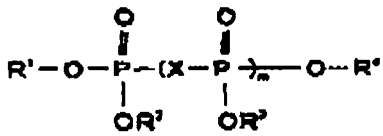

where $R^1$, $R^2$ $R^3$, and $R^4$ are each independently a $C_1$ to $C_{30}$ hydrocarbon, X is a $C_1$ to $C_{30}$ divalent organic group that may contain an oxygen atom and/or a nitrogen atom; and m is an integer from 0 to 5);

   c. an alkoxy group-containing organopolysiloxane (C) expressed by the following average compositional formula:

$$R^1_aSi(OR^2)_bO_{(4-a-b)/2} \qquad (1)$$

where $R^1$ is a substituted or unsubstituted univalent hydrocarbon group containing an aryl group and whose aryl group content is at least 20%; $R^2$ is a substituted or unsubstituted univalent hydrocarbon group; $R^1$ and $R^2$ may be the same as or different from each other; $0.2 \le a \le 27$; $0.2 \le b \le 24$; and $a+b < 3$, wherein the weight average molecular weight of the said alkoxy group containing organopolysiloxane is between 300 and 3000, and wherein
said phosphoric ester (B) being contained in an amount of 0.5 to 20 weight parts and said alkoxy group-containing organopolysiloxan (C) in an amount of 0.05 to 20 weight parts per 100 weight parts of the polycarbonate-based resin (A-1).

2. A polycarbonate-based nonflammable resin composition, **characterized by** containing:

   a. a poiycarbonate-based resin (A-1); and
   a. thermoplastic resin (A-2) other than a polycarbonate-based resin;
   b. a phosphoric ester (B) expressed by the following formula:

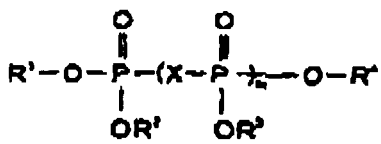

where $R^1$, $R^2$, $R^3$, and $R^4$ are each independently a $C_1$ to $C_{30}$ hydrocarbon; X is a $C_1$ to $C_{30}$ divalent organic group that may contain an oxygen atom and/ or a nitrogen atom; and m is an integer from 0 to 5; and
c. an alkoxy group-containing organopolysiloxane (C) expressed by the following average compositional formula:

$$R^1_aSi(OR^2)_bO_{(4-a-b)/2} \qquad (1)$$

where $R^1$ is a substituted or unsubstituted univalent hydrocarbon group containing an aryl group and whose aryl group content is at least 20%; $R^2$ is a substituted or unsubstituted univalent hydrocarbon group; $R^1$ and $R^2$ may be the same or different from each other; $0.2 \le a \le 27$; $0.2 \le b 24$ ,and $a + b \le 3$, wherein the weight average molecular weight of the said alkoxy group containing organopolysiloxane is between 300 and 3000, and wherein
said phosphoric ester (8) being contained in an amount of 0.5 to 20 weight parts and said alkoxy group-containing organopolysiloxane (C) in an amount of 0.05 to 20 weight parts per combined 100 weight parts of the polycarbonate-based resin (A-1) and the thermoplastic resin other than a polycarbonate-based resin (A-2).

3. A polycarbonate-based nonflammable resin composition as defined in Claim 1 or 2, **characterized in that** the phosphoric ester is bisphenol A-tetraphenyl diphosphate (BPADP) or bisphenol A tetracresyl diphosphate.

4. A polycarbonate-based nonflammable resin composition as defined in Claim 1 or 2, wherein the weight average molecular weight of the alkoxy group-containing organopolysiloxane (C) is between 300 and 2000.

5. A polycarbonate-based nonflammable resin composition as defined in any of Claims 1 to 4, **characterized in that** the alkoxy group-containing organopolysiloxane (C) includes a branched structure.

6. A polycarbonate-based nonflammable resin composition as defined in any of Claims 1 to 5, **characterized in that** the alkoxy group-containing organopolysiloxane (C) contains substantially no silanol groups (SiOH).

7. A polycarbonate-based nonflammable resin composition as defined in any of Claims 1 to 6, **characterized in that** $R^1$ of the alkoxy group-containing organopolysnoxane (C) is a methyl group, ethyl group, or phenyl group, and the phenyl group content is at least 20%.

8. A polycarbonate-based nonflammable resin composition as defined in any of Claims 1 to 7, **characterized in that** $R^2$ of the alkoxy group-containing organopolysiloxane (C) is a methyl group or ethyl group.

9. A polycarbonate-based nonflammable resin composition as defined in Claim 2, **characterized in that** the thermoplastic resin (A-2) is one or more types of resin selected from the group consisting of:

   polymers including as a structural component (a) an aromatic vinyl monomer component;
   copolymers including as structural components (a) an aromatic vinyl monomer component and (b) a vinyl cyanide monomer component,
   copolymers including as structural components (a) an aromatic vinyl monomer component, (b) a vinyl cyanide monomer component and (c) a rubber-like polymer;
   aromatic polyesters;
   polyphenylene ethers;
   polyether imides; and
   polyphenylene sulfides.

10. A polycarbonate-based nonflammable resin composition as defined in any of Claim 1 to 9, **characterized by** further containing (D) an anti-drip agent in an amount of 0.01 to 10 weight parts per 100 weight parts of the polycarbonate-based resin (A-1) or per combined 100 weight parts of the polycarbonate-based resin (A-1) and the thermoplastic resin (A-2).

### Patentansprüche

1. Eine auf Polycarbonat basierende nicht entzündliche Harzzusammensetzung, **dadurch gekennzeichnet, daß** sie folgendes enthält:

a. ein auf Polycarbonat basierendes Harz (A-1):
b. einen Phosphorsäureester (B) dargestellt durch die folgende Formel

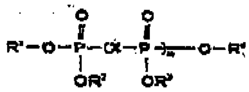

worin $R^1$, $R^2$, $R^3$ und $R^4$ jeweils unabhängig ein $C_1$ bis $C_{30}$ Kohlenwasserstoff sind;
X ist eine $C_1$ bis $C_{30}$ zweiwertige organische Gruppe, die ein Sauerstoffatom und/oder ein Stickstoffatom enthalten kann; und m ist eine ganze Zahl von 0 bis 5);
c. ein Alkoxygruppen-enthaltendes organopolysiloxan (C) dargestellt durch die folgende durchschnittliche Zusammensetzungsformel:

$$R^1_aSi\,(OR^2)_bO_{(4-a-b)/2} \qquad (1)$$

worin $R^1$ eine substituierte oder unsubstituierte einwertige Kohlenwasserstoffgruppe ist, enthaltend eine Arylgruppe, und deren Arylgruppengehalt mindestens 20% ist, $R^2$ ist eine substituierte oder unsubstituierte einwertige Kohlenwasserstoffgruppe; $R^1$ und $R^2$ können gleich sein oder unterschiedlich voneinander; $0{,}2 \leq a \leq 2{,}7$; $0{,}2 \leq b \leq 2{,}4$; und $a + b < 3$, worin das gewichtsmittlere Molekulargewicht des Alkoxygruppen-enthaltenden Organopolysiloxans zwischen 300 und 3000 ist, und
worin
der Phosphorsäureester (B) in einer Menge von 0,5 bis 20 Gewichtsteilen und das Alkoxygruppen-enthaltende Organopolysiloxan (C) in einer Menge von 0,05 bis 20 Gewichtsteilen pro 100 Gewichtsteilen des auf Polycarbonat basierenden Harzes (A-1) enthalten ist.

**2.** Eine auf Polycarbonat basierende nicht entzündliche Harzzusammensetzung, **dadurch gekennzeichnet, daß** sie folgendes enthält:

a. ein auf Polycarbonat basierendes Harz (A-1); und
ein thermoplastisches Harz (A-2), das kein auf Polycarbonat basierendes Harz ist;
b. einen Phosphorsäureester (B) dargestellt durch die folgende Formel:

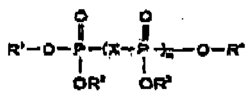

worin $R^1$, $R^2$, $R^3$ und $R^4$ jeweils unabhängig ein $C_1$ bis $C_{30}$ Kohlenwasserstoff sind;
X ist eine $C_1$ bis $C_{30}$ zweiwertige organische Gruppe, die ein Sauerstoffatom und/oder ein Stickstoffatom enthalten kann; und m ist eine ganze Zahl von 0 bis 5; und
c. ein Alkoxygruppen-enthaltendes Oxganapolysiloxan (C) dargestellt durch die folgende durchschnittliche Zusammensetzungsformel:

$$R^1_aSi\,(OR^2)_bO_{(4-a-b)/2} \qquad (1)$$

worin $R^1$ eine substituierte oder unsubstituierte einwertige Kohlenwasserstoffgruppe ist, enthaltend eine Arylgruppe, und deren Arylgruppengehalt mindestens 20% ist; $R^2$ ist eine substituierte oder unsubstituierte einwertige Kohlenwasserstoffgruppe; $R^1$ und $R^2$ können gleich sein oder unterschiedlich voneinander; $0{,}2 \leq a \leq 2{,}7$; $0{,}2 \leq b \leq 2{,}4$: und $a + b < 3$, worin das gewichtsmittlere Molekulargewicht des Alkoxygruppen-enthaltenden. Organopolysiloxans zwischen 300 und 3000 ist, und
worin
der Phosphorsäureester (B) in einer Menge von 0,5 bis 20 Gewichtsteilen und das Alkoxygruppen-enthaltende Organopolysiloxan (C) in einer Menge von 0,05 bis 20 Gewichtsteilen pro kombinierte 100 Gewichtsteile des auf Polycarbonat basierenden Harzes (A-1) und des thermoplastischen Harzes, das kein auf Polycarbonat basierendes Harz (A-2) ist, enthalten ist.

3. Eine auf Polycarbonat basierende nicht entzündliche Harzzusammensetzung wie in Anspruch 1 oder 2 definiert, **dadurch gekennzeichnet, daß** der Phosphorsäureester Bisphenol A-Tetraphenyldiphosphat (HPF1DP) oder Bisphenol A Tetracresyldiphosphat ist.

4. Eine auf Polycarbonat basierende nicht entzündliche Harzzusammensetzung wie in Anspruch 1 oder 2 definiert, worin das gewichtsmittlere Molekulargewicht des Alkoxygruppen-enthaltenden Organopolysiloxans (C) zwischen 300 und 2000 ist.

5. Eine auf Polycarbonat basierende nicht entzündliche Harzzusammensetzung wie in irgendeinem der Ansprüche 1 bis 4 definiert, **dadurch gekennzeichnet, daß** das Alkoxygruppen-enthaltende Organopolysiloxan (C) eine verzweigte Struktur einschließt.

6. Eine auf Polycarbonat basierende nicht entzündliche Harzzusammensetzung wie in irgendeinem der Ansprüche 1 bis 5 definiert, **dadurch gekennzeichnet, daß** das Alkoxygruppen-enthaltende Organopolysiloxan (C) im wesentlichen keine Silanolgruppen (SiOH) enthält.

7. Eine auf Polycarbonat basierende nicht entzündliche Harzzusammensetzung wie in irgendeinem der Ansprüche 1 bis 6 definiert, **dadurch gekennzeichnet, daß** $R^1$ von dem Alkoxygruppen-enthaltenden Organopolysiloxan (C) eine Methylgruppe, Ethylgruppe oder Phenylgruppe ist, und daß der Phenylgruppengehalt mindestens 20% ist.

8. Eine auf Polycarbonat basierende nicht entzündliche Harzzusammensetzung wie in irgendeinem der Ansprüche 1 bis 7 definiert, **dadurch gekennzeichnet, daß** $R^2$ von dem Alkoxygruppen-enthaltenden Organopolysiloxan (C) eine Methylgruppe oder Ethylgruppe ist.

9. Eine auf Polycarbonat basierende nicht entzündliche Harzzusammensetzung wie in Anspruch 2 definiert, **dadurch gekennzeichnet, daß** das thermoplastische Harz (A-2) ein oder mehrere Typen- von Harz ist, gewählt aus der Gruppe bestehend aus:

   Polymeren, die als eine strukurelle Komponente (a) eine aromatische Vinylmonomerkomponente einschließen;
   Copolymeren, die als strukturelle Komponenten (a) eine aromatische Vinylmonomerkomponente und (b) eine Vinylcyanidmonomerkomponente einschließen;
   Copolymeren, die als strukturelle Komponenten (a) eine aromatische Vinylmonomerkomponente, (b) eine Vinylcyanidmonomerkomponente, und (c) ein Gummi-ähnliches Polymer einschließen;
   aromatischen Polyestern;
   Polyphenylenethern;
   Polyetherimiden; und
   Polyphenylensulfiden.

10. Eine auf Polycarbonat basierende nicht entzündliche Harzzusammensetzung wie in irgendeinem der Ansprüche 1 bis 9 definiert, **dadurch gekennzeichnet, daß** sie weiter (D) einen anti-Tropfwirkstoff in einer Menge von 0,01 bis 10 Gewichtsteilen pro 100 Gewichtsteilen des auf Polycarbonat basierenden Harzes (A-1) oder pro kombinierten 100 Gewichtsteilen des auf Polycarbonat basierenden Harzes (A-1) und des thermoplastischen Harzes (A-2) enthält.

## Revendications

1. Composition de résine ininflammable à base de polycarbonate, **caractérisée en ce qu'**elle contient :

   a. une résine à base de polycarbonate (A-1) ;
   b. un ester phosphorique (B) représenté par la formule suivante :

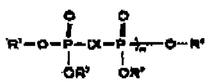

   dans laquelle $R^1$, $R^2$, $R^3$ et $R^4$ sont chacun indépendamment un hydrocarbure en $C_1$ à $C_{30}$ ;
   X est un groupe organique divalent en $C_1$ à $C_{30}$ qui peut contenir un atome d'oxygène et/ou un atome d'azote ;
   et m est un entier de 0 à 5 ;

c. un organopolysiloxane contenant un groupe alcoxy (C) représenté par la formule composée moyenne suivante :

$$R^1_aSi\ (OR^2)_bO_{(4-a-b)/2} \qquad (1)$$

dans laquelle $R^1$ est un groupe hydrocarboné univalent substitué ou non substitué contenant un groupe aryle et dont la teneur en groupe aryle est d'au moins 20 % ; $R^2$ est un groupe hydrocarboné univalent substitué ou non substitué ; $R^1$ et $R^2$ peuvent être identiques ou différents l'un de l'autre ; $0,2 \leq a \leq 2,7$ ; $0,2 \leq b \leq 2,4$ ; et $a + b < 3$, où le poids moléculaire moyen en poids dudit organopolysiloxane contenant un groupe alcoxy est entre 300 et 3000, et dans laquelle
ledit ester phosphorique (B) est contenu en une quantité de 0,5 à 20 parties en poids et ledit organopolysiloxane contenant un groupe alcoxy (C) en une quantité de 0,05 à 20 parties en poids pour 100 parties en poids de la résine à base de polycarbonate (A-1).

**2.** Composition de résine ininflammable à base de polycarbonate, **caractérisée en ce qu'**elle contient :

a. une résine à base de polycarbonate (A-1) ; et
une résine thermoplastique (A-2) autre qu'une résine à base de polycarbonate ;
b. un ester phosphorique (B) représenté par la formule suivante :

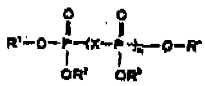

dans laquelle $R^1$, $R^2$, $R^3$ et $R^4$ sont chacun indépendamment un hydrocarbure en $C_1$ à $C_{30}$ ;
X est un groupe organique divalent en $C_1$ à $C_{30}$ qui peut contenir un atome d'oxygène et/ou un atome d'azote : et m est un entier de 0 à 5 ; et
c. un organopolysiloxane contenant un groupe alcoxy (C) représenté par la formule composée moyenne suivante :

$$R^1_aSi(OR^2)_bO_{(4-a-b)/2} \qquad (1)$$

dans laquelle $R^1$ est un groupe hydrocarboné univalent substitué ou non substitué contenant un groupe aryle et dont la teneur en groupe aryle est d'au moins 20 % ; $R^2$ est un groupe hydrocarboné univalent substitué ou non substitué ; $R^1$ et $R^2$ peuvent être identiques ou différents l'un de l'autre : $0,2 \leq a \leq 2,7$ ; $0,2 \leq b \leq 2,4$ ; et $a + b < 3$, où le poids moléculaire moyen en poids dudit organopolysiloxane contenant un groupe alcoxy est entre 300 et 3000, et dans laquelle
ledit ester phosphorique (B) est contenu en une quantité de 0,5 à 20 parties en poids et ledit organopolysiloxane contenant un groupe alcoxy (C) en une quantité de 0,05 à 20 parties en poids pour 100 parties en poids combinées de la résine à base de polycarbonate (A-1) et de la résine thermoplastique autre qu'une résine à base de polycarbonate (A-2).

**3.** Composition de résine ininflammable à base de polycarbonate telle que définie dans 1a revendication 1 ou 2, **caractérisée en ce que** l'ester phosphorique est le tétraphényl diphosphate de bisphénol A (BPADP) ou le tétracrésyl diphosphate de bisphénol A.

**4.** Composition de résine ininflammable à base de polycarbonate telle que définie dans la revendication 1 ou 2, dans laquelle le poids moléculaire moyen en poids de l'organopolysiloxane contenant un groupe alcoxy (C) est entre 300 et 2000.

**5.** Composition de résine ininflammable à base de polycarbonate telle que définie dans l'une quelconque des revendications 1 à 4, **caractérisée en ce que** l'organopolysiloxane contenant un groupe alcoxy (C) inclut une structure ramifiée.

**6.** Composition de résine ininflammable à base de polycarbonate telle que définie dans l'une quelconque des revendications 1 à 5, **caractérisée en ce que** l'organopolysiloxane contenant un groupe alcoxy (C) ne contient essentiellement pas de groupes silanols (SiOH).

**7.** Composition de résine ininflammable à base de polycarbonate telle que définie dans l'une quelconque des revendications 1 à 6, **caractérisée en ce que** $R^1$ de l'organopolysiloxane contenant un groupe alcoxy (C) est un groupe méthyle, un groupe éthyle ou un groupe phényle, et la teneur en groupe phényle est d'au moins 20 %.

**8.** Composition de résine ininflammable à base de polycarbonate telle que définie dans l'une quelconque des revendications 1 à 7, **caractérisée en ce que** $R^2$ de l'organopolysiloxane contenant un groupe alcoxy (C) est un groupe méthyle ou un groupe éthyle.

**9.** Composition de résine ininflammable à base de polycarbonate telle que définie dans la revendication 2, **caractérisée en ce que** la résine thermoplastique (A-2) est une ou plusieurs sortes de résine choisies dans le groupe constitué par :

les polymères incluant en tant que constituant structural (a) un constituant monomère vinylique aromatique:

les copolymères incluant en tant que constituants structuraux (a) un constituant monomère vinylique aromatique et (b) un constituant monomère cyanure de vinyle ;
les copolymères incluant en tant que constituants structuraux (a) un constituant monomère vinylique aromatique, (b) un constituant monomère cyanure de vinyle et (c) un polymère de type caoutchouc;
les polyesters aromatiques ;
les éthers de polyphénylène ;
les polyéther imides ; et
les polysulfures de phénylène.

**10.** Composition de résine ininflammable à base de polycarbonate telle que définie dans l'une quelconque des revendications 1 à 9, **caractérisée en ce qu'**elle contient en outre (D) un agent anti-goutte en une quantité de 0,01 à 10 parties en poids pour 100 parties en poids de la résine à base de polycarbonate (A-1) ou pour 100 parties en poids combinées de la résine à base de polycarbonate (A-1) et de la résine thermoplastique (A-2).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 62025706 A
- JP 62060421 A
- JP H586295 A
- JP S56100E53 B
- JP H348947 B
- JP 0139964 H
- JP H11140294 A
- JP H10139964 A
- JP H11217494 A
- JP H11222559 A
- JP H8225737 A
- US 3028385 A
- US 3334154 A
- US 4001124 A
- US 4131576 A
- JP H2175723 A
- JP H2124934 A
- US 4001184 A
- US 4238569 A
- US 4238597 A
- US 4474999 A